# EUROPEAN PATENT SPECIFICATION

(11) **EP 1 279 808 B1**
(45) Date of publication and mention of the grant of the patent: **13.06.2007**
(21) Application number: 02077789.2
(22) Date of filing: 10.07.2002
(51) Int. Cl.: F02B 67/06

(54) **Mechanism for actuating auxiliary device of internal combustion engines**
Getriebe für ein Hilfsgerät einer Brennkraftmaschine
Entrainement d'un dispositif auxiliaire d'un moteur à combustion

(30) Priority: 26.07.2001 IT MI20010435 U
(43) Date of publication of application: 29.01.2003
(73) Proprietor: PIAGGIO & C. S.p.A., 56025 Pontedera (Pisa) (IT)
(72) Inventor: Nesti, Paolo, 56010 Ghezzano, Pisa (IT)
(74) Representative: De Gregori, Antonella

(56) References cited:
- EP-A- 0 308 076
- US-A- 5 426 988
- PATENT ABSTRACTS OF JAPAN vol. 2000, no. 01, 31 January 2000 (2000-01-31) & JP 11 294131 A (MIKUNI ADEC CORP), 26 October 1999 (1999-10-26)

## Description

The present invention refers to a mechanism for actuating auxiliary devices of internal combustion engines.

In the field of internal combustion engines or of other machines of this type a series of actuation mechanisms for auxiliary devices, such as pumps and compressors, are foreseen.

Sometimes, actuation mechanisms for auxiliary devices which require a transformation of rotational motion into reciprocating linear motion have to be foreseen.

To carry out such a transformation auxiliary devices equipped with cam and cam follower mechanisms and possibly connected to a roller and the relative bearing mounted on the cam follower to be coupled with the cam are present.

In mechanisms with a roller there is a reduction in friction, but an increase in the mass involved in the reciprocating motion, in the complexity and in the cost of the system.

The positioning of the quoted auxiliary devices can make transmission between the drive shaft and the shaft of the auxiliary device itself necessary.

Problems connected to the dissipation of power and the generation of vibrations and noise pollution are also present in these known devices.

Moreover, mechanisms have been realised in which in order to obtain reciprocating linear motion from a rotational motion, realisations with complex manufacture, like an eccentric cam or a cam on the drive shaft have been foreseen. All this brings with it increased costs and manufacturing and assembly complexity.

A purpose of the present invention is thus to remove the aforementioned drawbacks providing a mechanism for the actuation of auxiliary devices of internal combustion engines which are simple and cost-effective with respect to the known and used mechanisms.

Another purpose is to eliminate difficult manufacture and assembly of the parts of the mechanism.

These and other purposes of the present invention are achieved through the mechanism for the actuation of auxiliary devices of internal combustion engines as claimed in the attached claims.

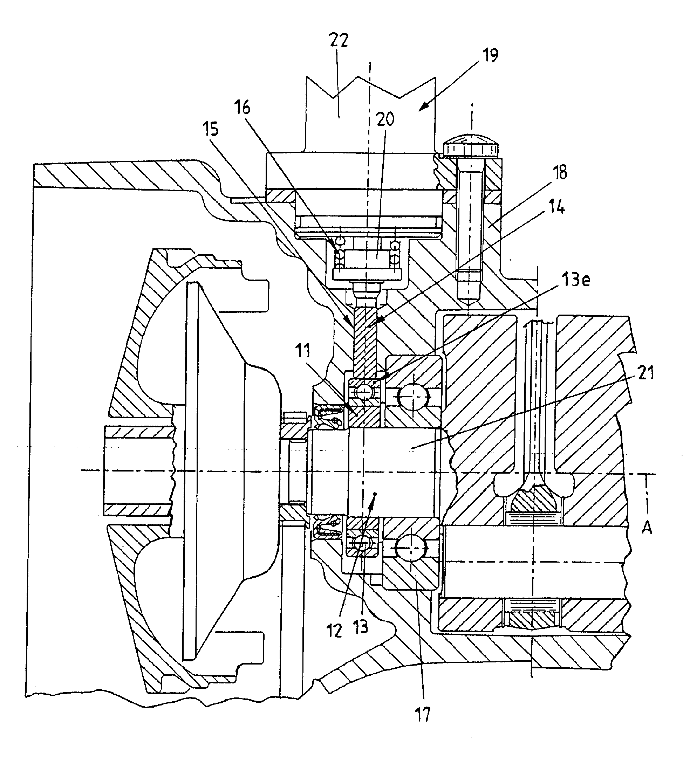

The characteristics and the advantages of the mechanism for the actuation of auxiliary devices of internal combustion engines according to the present invention will become clearer from the following description, given as an example and not for limiting purposes, referring to the attached figure illustrating a partial section of an internal combustion engine in which a mechanism according to the invention is arranged.

As illustrated in the figure, a mechanism for the actuation of auxiliary devices of internal combustion engines according to the invention is formed in an engine block 18 in which a drive shaft, generally indicated with 12, is supported at the motor unit 18 through bearings 17, one of which is shown in the figure.

The shaft 12 does not present particular shapes to control the auxiliary devices and in a portion (21) of it the aforementioned bearing 17 is force fitted so as to be capable of rotating about a central axis A.

Moreover, in its quoted portion 21, an eccentric bush 11 is connected firmly to the drive shaft 12, with the eccentric bush solidly fixed on the portion 21 itself.

According to a preferred embodiment of the invention the eccentric bush 11 is realised with a circular external profile and is connected firmly to the shaft 12 through force fitting.

Moreover, since this eccentric bush 11 does not have to bear particularly demanding strains it can be realised in a lighter material with respect to that of the shaft 12. In this way the size of the rotating non-balanced mass is significantly reduced and consequently the vibrations and the noise pollution is also reduced.

On the outside of the eccentric bush 11 a roller bearing 13 is force fitted, and therefore is fixed firmly to it.

A cam follower 14, such as a bar, positioned in contact with an external thrust block or race 13e of the bearing 13, is placed so that it can slide in a guide seat 15 formed inside the engine block 18.

The cam follower 14 is positioned in such a way so that it can receive the rotational motion from the eccentric bush 11 and from the relative bearing 13 and transmit it in the form of reciprocating linear motion to an auxiliary device, indicated in its whole with 19, which can consist, for example, of a pump or a compressor.

A return spring 16 is foreseen arranged between an enlarged plate of a stem 20 of the auxiliary device 19 and the casing of the quoted auxiliary device 19. The spring 16 is positioned in such a way as to elastically oppose the motion of the cam follower 14 and keep it in contact with the external thrust block 13e of the bearing 13.

In some applications such a cam follower 14 can be an integral part of the part to be actuated.

Moreover, it is also possible to use a roller bearing 13, of the self-lubricating shielded type, which also allows the operation of the system in an environment in which a lubricant is not present.

In addition, the present invention presents the following further advantages:
As a whole, the system is cost-effective since it is composed of a few elements of simple construction or that are easily available on the market.

It has greater constructive simplicity because the onerous task of carrying out the eccentric manufacture on the drive shaft is removed with respect to that which is foreseen by the state of the art.

There is a reduced dissipation of power by friction since highly controlled lateral thrusts act upon the cam follower 14.

Moreover, there is no transmission towards an axis of the auxiliary devices and additional pieces and parts have been eliminated.

Vibrations and the noise pollution are thus reduced with undoubted advantage both for the engine and for the user.

It has thus been seen how the drawbacks presented by mechanisms for actuating auxiliary devices known and used up to now are overcome.

A mechanism for actuating auxiliary devices of internal combustion engines thus conceived is susceptible to numerous modifications and variants, all falling within the scope of the present invention.

Moreover, all of the details can be replaced with technically equivalent elements. In practice the materials used, as well as the dimensions, can be whatever according to the technical requirements.

## Claims

1. A mechanism for actuating auxiliary devices of internal combustion engines arranged in an engine block (18) in which is positioned a drive shaft (12) with eccentric cam (11) and in which is foreseen a cam follower (14), which, when actuated by the eccentric cam (11) of the drive shaft (12), transmits the reciprocating linear motion to an auxiliary device (19), **characterised in that** said drive shaft (12) in at least one of its portion (21) carries solidly attached an eccentric bush (11) on the outside of said eccentric bush (11) being force fitted a roller bearing (13) whose external thrust block (13e) is placed in contact with the cam follower (14), and **in that** said eccentric bush (11) is realized in a lighter material than that of said drive shaft (12).

2. Mechanism according to claim 1, **characterised in that** said cam follower (14) is arranged in a guide seat (15) formed inside the engine block (18).

3. Mechanism according to claim 1 or 2, **characterised in that** said eccentric bush (11) is force fitted on said at least one portion (21) of said drive shaft (12).

4. Mechanism according to claim 1, **characterised in that** between a stem (20) of said auxiliary device (19) and said auxiliary device (19) is positioned a return spring (16) so as to elastically oppose the motion of said cam follower (14) and keep it in contact with an external thrust block (13e) of said bearing (13) fixed firmly to said eccentric bush (11).

## Patentansprüche

1. Vorrichtung zum Betätigen von Nebenaggregaten von Verbrennungsmotoren, die in einem Motorblock (18) angeordnet sind, in dem sich eine Antriebswelle (12) mit exzentrischem Nocken (11) befindet und in dem ein Schlepphebel (14) vorgesehen ist, der die hin- und hergehende Linearbewegung auf ein Nebenaggregat (19) überträgt, wenn er von der exzentrischen Nocke (11) der Antriebswelle (12) betätigt wird,
**dadurch gekennzeichnet, dass** die Antriebswelle (12) auf zumindest einem Abschnitt (21) von ihr eine fest angebrachte exzentrische Hülse (11) trägt, wobei auf der Außenseite der exzentrischen Hülse (11) ein Kugellager (13) kraftschlüssig angeordnet ist, dessen äußerer Tragring (13e) sich in Kontakt mit dem Schlepphebel (14) befindet, und dass die exzentrische Hülse (11) aus einem leichteren Material als das der Antriebswelle (12) realisiert ist.

2. Vorrichtung nach Anspruch 1,
**dadurch gekennzeichnet, dass** der Schlepphebel (14) in einem innerhalb des Motorblocks (18) ausgebildeten Führungssitz (15) angeordnet ist.

3. Vorrichtung nach Anspruch 1 oder 2,
**dadurch gekennzeichnet, dass** die exzentrische Hülse (11) kraftschlüssig auf dem zumindest einen Abschnitt (21) der Antriebswelle (12) angeordnet ist.

4. Vorrichtung nach Anspruch 1,
**dadurch gekennzeichnet, dass** zwischen einem Schaft (20) des Nebenaggregats (19) und dem Nebenaggregat (19) eine Rückstellfeder (16) angeordnet ist, um der Bewegung des Schlepphebels (14) elastisch entgegenzuwirken und ihn in Berührung mit einem äußeren Tragring (13e) des Lagers (13) zu halten, das fest an der exzentrischen Hülse (11) angebracht ist.

## Revendications

1. Mécanisme pour actionner des dispositifs auxiliaires de moteurs à combustion interne disposés dans un bloc moteur (18) dans lequel est positionné un arbre d'entraînement (12) muni d'une came excentrique (11) et dans lequel est prévu un galet de came (14) qui, lorsqu'il est actionné par la came excentrique (11) de l'arbre d'entraînement (12), transmet le mouvement de va-et-vient linéaire à un dispositif auxiliaire (19), **caractérisé en ce que** ledit arbre d'entraînement (12), dans au moins l'une de ses parties (21), porte une douille excentrique solidement fixée (11), sur l'extérieur de ladite douille excentrique (11) étant monté à force un roulement à rouleaux (13) dont le bloc de poussée externe (13e) est mis en contact avec le galet de came (14), et **en ce que** ladite douille excentrique (11) est faite dans un matériau plus léger que celui dudit arbre d'entraînement (12).

2. Mécanisme selon la revendication 1, **caractérisé en ce que** ledit galet de came (14) est placé dans un siège de guidage (15) formé à l'intérieur du bloc moteur (18).

3. Mécanisme selon la revendication 1 ou 2, **caractérisé en ce que** ladite douille excentrique (11) est montée à force sur ladite au moins une partie (21) dudit arbre d'entraînement (12).

4. Mécanisme selon la revendication 1, **caractérisé en ce que**, entre une tige (20) dudit dispositif auxiliaire (19) et ledit dispositif auxiliaire (19) est positionné un ressort de rappel (16) destiné à s'opposer de manière élastique au mouvement dudit galet de came (14) et à le maintenir en contact avec un bloc de poussée externe (13e) dudit roulement (13) solidement fixé à ladite douille excentrique (11).
